# EUROPÄISCHE PATENTSCHRIFT

(11) **EP 0 419 896 B1**
(45) Veröffentlichungstag und Bekanntmachung des Hinweises auf die Patenterteilung: **08.03.1995**
(21) Anmeldenummer: 90116985.4
(22) Anmeldetag: 04.09.1990
(51) Int. Cl.: H04L 7/033

(54) **Synchronisierungseinrichtung für hohe Datenraten**
Synchronizing device for high data rates
Dispositif de synchronisation pour données à grand débit

(30) Priorität: 27.09.1989 DE 3932239
(43) Veröffentlichungstag der Anmeldung: 03.04.1991
(73) Patentinhaber: SIEMENS AKTIENGESELLSCHAFT, 80333 München (DE)
(72) Erfinder: Brückner, Roland, Dipl.-Ing., D-8000 München 71 (DE)

(56) Entgegenhaltungen:
- US-A- 4 012 598
- US-A- 4 649 438
- US-A- 4 819 251
- IEEE TRANSACTIONS ON CIRCUITS AND SYSTEMS, Vol. CAS-25, Nr. 4, April 1978, NEW YORK (US); Seiten 222 - 228; W.C. LEUNG: 'Optimum LSI Implementation for a Digital Phase-Locked Loop'

## Beschreibung

Die Erfindung betrifft eine Synchronisiereinrichtung nach dem Oberbegriff des Patentanspruchs 1 (siehe auch z.B. Dokument US-A-4 012 598).

Aus der nachveröffentlichten deutschen Patentanmeldung, Aktenzeichen P 39 17 426.3 ist ein Verfahren zum Empfang eines binären Digitalsignals bekannt. Das Digitalsignal wird von einer Kette aus Laufzeitgliedern insgesamt mindestens für eine Bitdauer verzögert. An den Ein- bzw. Ausgängen der Laufzeitglieder werden jeweils aus den Flanken des Digitalsignals Impulse abgeleitet und mit Abfrageimpulsen eines geräteinternen Taktsignals, dessen Frequenz gleich der Bitrate des Digitalsignals oder plesiochron zu ihr ist, über UND-Schaltungen verknüpft. Diese schalten das verzögerte Digitalsignal mit einer dem Taktsignal entsprechenden Phasenlage über eine ODER-Verknüpfung auf eine D-Kippstufe durch. Das durchgeschaltete Digitalsignal wird mit dem über ein weiteres Verzögerungsglied geführten geräteinternen Taktsignal abgetastet. Kritisch ist bei dieser Realisation die Durchschaltung des selektierten Taktes. Diese Lösung erfordert daher schnelle Logikschaltungen oder aber sehr geringe interne Laufzeitschwankungen, um die auftretenden Laufzeiten ausgleichen zu können. Sie wurde daher in ECL-Technik realisiert. Für langsamere Schaltungstechniken, beispielsweise wie CMOS-Technik ist dieser Schaltungskonzept nicht geeignet.

Aufgabe der Erfindung ist es, eine Synchronisiereinrichtung anzugeben, die für langsamere Schaltungstechniken geeignet ist.

Diese Aufgabe wird durch die im Patentanspruch 1 angegebene Synchronisiereinrichtung gelöst.

Vorteilhafte Ausbildungen der Erfindung sind in den abhängigen Anprüchen angegeben.

Bei der Synchronisiereinrichtung ist vor allem vorteilhaft, daß kein gegenüber der Datenrate doppelt schnelles Systemtaktsignal benötigt wird. Zusätzliche Oszillatoren bzw. spannungsgeregelte Oszillatoren werden ebenfalls nicht benötigt. Die Schaltung ist weitgehend unabhängig von Laufzeitschwankungen der einzelnen Bauelemente und eignet sich daher besonders für hochintegrierte CMOS-Schaltungen. Hierbei sind die kurzen, kritischen Signalwege und eine synchrone Signalverarbeitung sowie eine dem Datenfluß gegenläufige Verzögerung des Taktsignals besonders vorteilhaft.

Bei der Schaltung wird dieselbe Verzögerungleitung sowohl zum Erkennung des optimalen Abtasttaktes als auch zur Durchschaltung der Daten verwendet. Bei Multiplexsystemen kann die Verzögerungsleitung natürlich für mehrere Synchronisiereinrichtungen benutzt werden.

Durch die Verwendung einer zusätzlichen Verzögerungskette können auch Phasenschwankungen von mehreren Bits ausgeglichen werden.

Darüberhinaus ist durch eine gleich aufgebaute Hintergrundsynchronisierung eine Anpassung an Phasen- bzw. Frequenzschwankungen ohne Datenverlust möglich. Durch Seriell-Parallel-Wandlung der ausgegebenen Daten ist auch eine Anpassung an asynchrone Eingangsdaten ohne Erhöhung der System-Taktrate möglich.

Ausführungsbeispiele der Erfindung werden anhand von Prinzipschaltbildern und Zeitdiagrammen näher erläutert.

Es zeigen
- Figur 1: ein Schaltbild der Synchronisiereinrichtung,
- Figur 2: ein Zeitdiagramm,
- Figur 3: eine Schaltungsvariante der Synchronisiereinrichtung,
- Figur 4: eine Schaltung zur Seriell-Parallel-Wandlung,
- Figur 5: ein Zeitdiagramm für den Empfang von Eingangsdaten mit niedrigere Frequenz und
- Figur 6: ein Zeitdiagramm für Eingangsdaten mit höherer Frequenz.

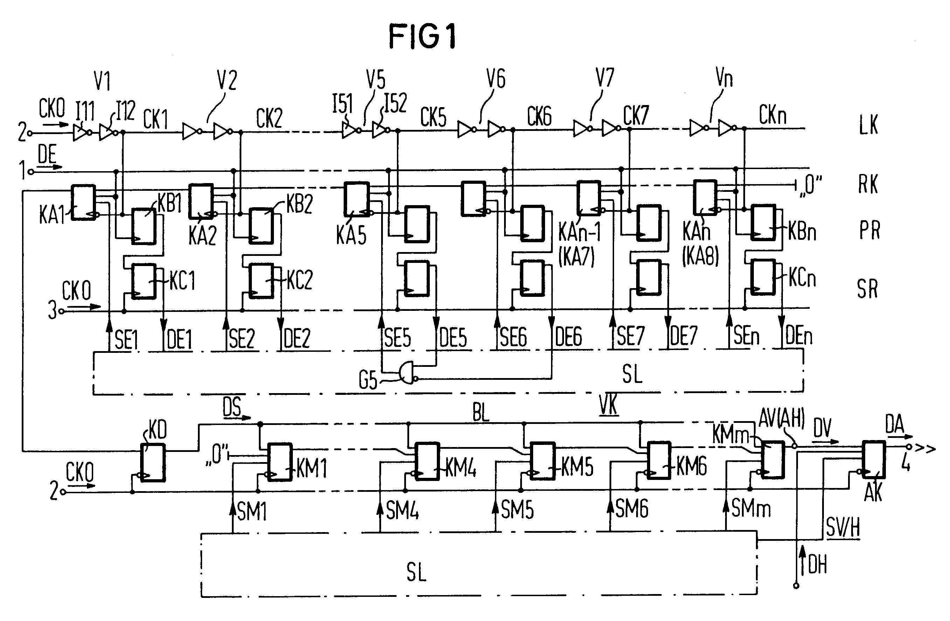

Die in Figur 1 dargestellte Synchronisiereinrichtung enthält eine Laufzeitkette LK mit Laufzeitglieder V1-Vn, die jeweils aus zwei Invertern I11, I12, .... I51, I52,.... bestehen. Am Eingang 2 der Laufzeitkette LK liegt ein System-Taktsignal CK0 an. Es ist eine aus n Registerkippstufen KA1-KAn bestehende Registerkette RK vorgesehen, bei der der Ausgang der letzten Registerkippstufe KAn (hier KAS) mit einem Dateneingang der vorhergehenden Kippstufe KAn-1 (hier KA7) verbunden ist. In derselben Weise sind die übrigen Registerkippstufen verdrahtet, so daß sie ein Schieberegister bilden, wobei der Ausgang des ersten Verzögerungsgliedes V1 mit dem Takteingang der ersten Registerkippstufe KA1 verbunden ist und die Takteingänge der weiteren Registerkippstufen KA2-KAn mit den Ausgängen der Verzögerungsglieder V2-Vn verbunden sind. Die Verzögerung des Taktsignals ist also dem Datenfluß entgegengerichtet. Die Registerkippstufen weisen jeweils einen zweiten Dateneingang auf. Alle zweiten Dateneingänge sind an den Dateneingang 1 der Synchronisiereinrichtung angeschaltet. Über Selekteingänge SE1-SEn kann jeweils der erste Dateneingang der Registerkippstufen aktiviert werden, wodurch ein Schieberegister gebildet wird, oder der zweite Dateneingang nur einer Registerkippstufe ausgewählt werden, in die dann die Eingangsdaten DE übernommen werden und mindestens die mit einem niedrigeren Index versehenen Registerkippstufen ein Schieberegister bilden. Die Taktsignale CK1-CKn sind außerdem jeweils auf einem Dateneingang von Kippstufen KB1-KBn eines Phasenregisters PR geführt, deren Takteingänge mit dem Dateneingang 1 verbunden sind. Im Gegensatz zu den Kippstufen der Registerkette RK werden die Kippstufen des Phasenregisters mit der positiven Flanke getriggert. Die Ausgänge der Kippstufen KB1-KBn, die ein Speicherregister SR bilden, sind jeweils über eine Speicherkippstufe KC1-KCn geführt. Die Ausgänge DE1-DEn des Speicherregisters sind mit einer Steuerlogik SL verbunden. Die Selekteingänge der Registerkippstufen sind ebenfalls an die Steuerlogik SL angeschaltet.

Der Ausgang der ersten Registerkippstufe KA1 ist an den Eingang einer D-Kippstufe KD (auf die auch verzichtet werden kann, wenn die erste Registerkippstufe KA1 mit dem System-Taktsignal CK0 getaktet wird) angeschaltet, deren Takteingang das Taktsignal CK0 zugeführt ist. Außerdem ist eine Verzögerungskette VK mit den Verzögerungskippstufen KM1 bis KMm vorgesehen, die alle vom selben Taktsignal CK0 getaktet werden. Die Verzögerungskippstufen KM1-KMn können als Schieberegister geschaltet werden oder über jeweils einen zweiten Dateneingang (wie die Registerkippstufen) direkt das Datensignal DS - das den stets mit demselben Taktsignal CK0 getakteten Eingangsdaten DE entspricht - vom Ausgang der D-Kippstufe KD über eine Busleitung BL übernehmen und so die Verzögerung in Stufen von einer Datenbitdauer ändern. Gesteuert werden sie über Selekteingänge SM1-SMn ebenfalls von der Steuerlogik SL. Außerdem ist eine Ausgangskippstufe AK vorgesehen, der wahlweise Ausgangsdaten DV vom Ausgang AV der letzten Kippstufe KMm der Verzögerungskette oder Daten DH von einem Ausgang AH einer hier nicht dargestellten da gleich aufgebauten Hintergrundsynchronisierung zugeführt werden. Am Ausgang 4 der Synchronisiereinrichtung werden Ausgangsdaten DA mit dem System-Taktsignal CK0 abgegeben.

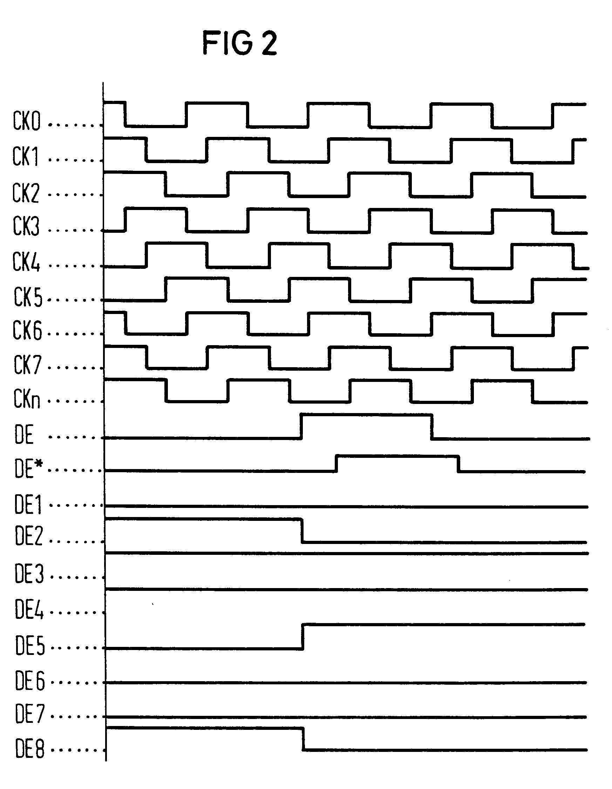

Nach Figur 2 werden n = 8 verschiedene Taktsignale CK1-CKn erzeugt, die gegeneinander phasenverschoben sind. Die gesamte Verzögerungszeit zwischen dem ersten Taktsignal CK1 und dem letzten Taktsignal CKn muß mindestens so bemessen sein, daß sie einer Periodendauer des Taktsignals entspricht, die in eine entsprechende Anzahl, hier in n = 8, gleiche Abschnitte aufgeteilt wird. Um Toleranzschwankungen berücksichtigen zu können, muß die Laufzeitkette eine entsprechende Anzahl von Laufzeitgliedern aufweisen oder die Verzögerungsglieder müssen so dimensioniert sein, daß die Gesamtlaufzeit auch im ungünstigsten Fall mehr als eine Taktsignalperiode beträgt, wie dies in Figur 2 auch der Fall ist. Außerdem darf die Laufzeit von drei Verzögerungsgliedern nicht größer als eine Taktsignalperiode sein.

Je geringer die Phasenverschiebung zwischen den Taktsignalen ist, desto genauer kann die Abtastung der Eingangsdaten durchgeführt werden. Der Schaltungsaufwand erhöht sich jedoch entsprechend. Die Taktsignale CK1-CKn liegen an den Dateneingängen der Kippstufen KB1-KBn an. Die logischen Zustände des Taktsignals - logische Null oder logische Eins - werden mit den positiven Flanken der Eingangsdaten DE in den Kippstufen abgespeichert. Anstelle der positiven Flanke können natürlich auch die negativen Flanken verwendet werden oder Impulse, die von einer oder beiden Flanken abgeleitet werden. Aus den abgespeicherten Taktzuständen geht die Phasenlage der Eingangsdaten DE zu den Taktsignalen hervor. Es wird jetzt von der Steuerlogik SL dasjenige Taktsignal CK1-CKn zum Einspeichen der Eingangsdaten in eine der Registerkippstufen ausgewählt, das die Eingangsdaten möglichst in der Mitte abtastet. Da im vorliegendem Beispiel die Registerkippstufen KA1-KAn mit der negativen Signalflanke getriggert werden, muß entsprechend Figur 2 das Taktsignal CK5 oder CK6 ausgewählt werden; im vorliegenden Beispiel das Taktsignal CK5. Das entscheidende Kriterium für die Auswahl des Taktsignals ist die postive Flanke eines der Taktsignale CK1 bis CKn beim Auftreten einer positiven Flanke der Eingangsdaten und damit der der abgespeicherten Taktsignalzustände - hier CK5 und CK6. Die im Phasenregister gespeicherten Taktsignalzustände werden zunächst mit dem Taktsignal CK0 in das Speicherregister SR übernommen, um frei von Störimpulsen von der Steuerlogik verarbeitet werden zu können. Die Übernahme in das Speicherregister muß jedoch nicht mit jedem Impuls des Taktsignals CK0 erfolgen, sondern kann entsprechend der benötigten Verarbeitungszeit angepaßt werden.

Die Steuerlogik hat die Möglichkeit, beispielsweise mit jedem hundertsten Impuls des System-Taktsignals eine neue Synchronisation vorzunehmen; sie kann auch während mehrerer Taktsignalperioden durch Mittelung das ideale Taktsignal auswählen. Eine besonders einfache Steuerlogik ist in Figur 1 für die Registerkippstufe KA5 dargestellt. Sie besteht aus nur einem Gatter, dessen Ausgang an den Selekteingang SE5 angeschaltet ist und dessen erster Eingang direkt mit dem Ausgang der Speicherkippstufe KC5 verbunden ist, während der zweite invertierende Eingang an den Ausgang DE6 der folgenden Speicherkippstufe KC6 angeschlossen ist. In derselben Weise werden die Selekteingänge der übrigen Registerkippstufen gesteuert. Ohne zusätzlichen Maßnahmen erfolgt jedoch eine Neusynchronisierung mit jeder positiven Taktflanke der Eingangsdaten.

Werden auch die negativen Flanken der Taktsignale bewertet und hierdurch eine zugehörige Registerkippstufe ausgewählt, dann muß die Übernahme der Eingangsdaten mit einem invertierten Taktsignal erfolgen, um die Eingangsdaten in der Bitmitte abzutasten.

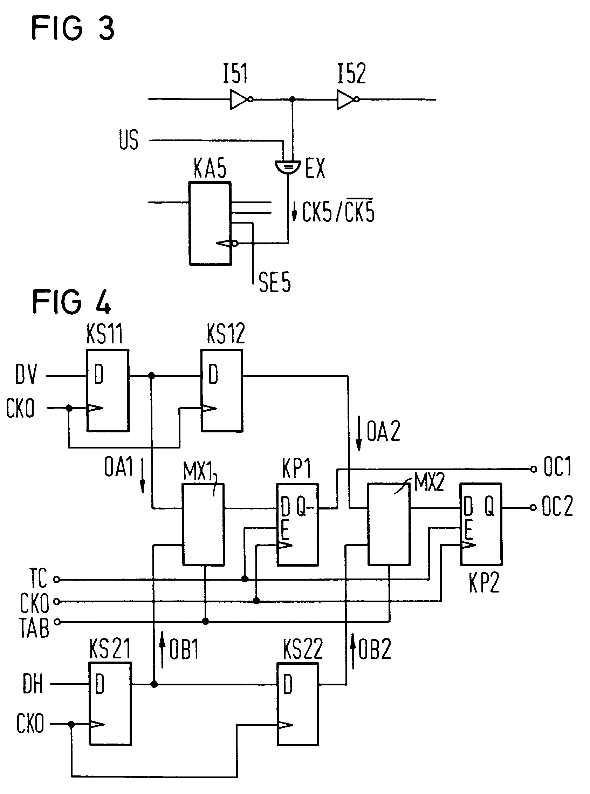

Eine entsprechende Schaltungsanordnung ist in Figur 3 dargestellt. Die Invertierung erfolgt durch ein Exklusiv-ODER-Gatter EX, das zwischen dem Ausgang des ersten Inverters I51 des Verzögerungsgliedes V5 und dem Takteingang der Registerkippstufe KA5 eingeschaltet ist und von einem Umschaltsignal US gesteuert wird, das der logischen 0 beim Auftreten einer negativen Flanke eines Taktsignals entspricht. Das Umschaltsignal kann durch Gatter gewonnen werden, die dem Gatter G5 - jedoch mit vertauschten Eingängen - entsprechen. Das Gatter G5 kann durch ein Exklusive-OR-Gatter ersetzt werden.

Die in Figur 3 dargestellte Schaltung ist natürlich für alle Registerkippstufen vorgesehen. Die Steuerlogik sorgt dafür, daß die Eingangsdaten nur in eine Registerkippstufe übernommen werden. Bei der folgenden Beschreibung wird jedoch davon ausgegangen, daß nur die positiven Flanken der Taktsignale die Einspeicherung der Eingangsdaten bestimmen.

Sollten, wie im Zeitdiagramm nach Figur 2 für die Eingangsdaten DE* dargestellt, zwei positive Flanken bei den Taktsignalen CK1 und CK7 auftreten, so bedeutet dies, daß auch zwei Taktsignale zur Abtastung geeignet sind. In diesem Fall wird von der Steuerlogik eines der beiden ausgewählt. Um die Steuerlogik einfacher ausführen zu können, wird das Taktsignal mit dem niedrigsten (oder höchsten Index) ausgewählt. Bei einer noch zu erläuternden Umschaltung zwischen den Taktsignalen wird stets das nächstliegende zur Abtastung geeignete Taktsignal ausgewählt. Tritt dagegen keine positive Flanke auf, so wird das zur Einspeicherung ausgewählte Taktsignal beibehalten. Das in eine Registerkippstufe, beispielsweise KA5, übernommene Datenbit wird über die Registerkippstufen KA4, KA3, KA2 und KA1 in die D-Kippstufe KD mit dem System-Taktsignal CK0 übernommen. Dabei wird es jeweils bei der Übernahme von einer Registerkippstufe zu einer Registerkippstufe mit niedrigerem Index um die Dauer eines Datenbits minus der Laufzeit eines Verzögerungsgliedes verzögert. Bei kleinen Phasenschwankungen der Eingangsdaten werden diese anstelle in die Registerkippstufe KA5 in die benachbarte Registerkippstufe KA4 oder die Registerkippstufe KA6 übernommen und ebenfalls bis zur D-Kippstufe durchgeschoben. Bei Phasenschwankungen sorgt also die Registerkette stets für die richtige Übernahme der Eingangsdaten. Durch die veränderte Datenlaufzeit in der Registerkette wird das abgetastete Datenbit um eine Taktsignalperiode früher oder später in die D-Kippstufe KD übernommen. Dieser Laufzeitunterschied muß durch die Verzögerungskette ausgeglichen werden. Die Steuerlogik veranlaßt dies, indem die Anzahl der vom abgetasteten Datenbit durchlaufenen Kippstufen der Registerkette und der Verzögerungskette konstant bleibt.

Bei der Umschaltung zwischen den einzelnen Registerkippstufen KA1-KAn soll in der Regel ein Datenverlust vermieden werden. Geht man beispielsweise davon aus, daß Eingangsdaten mit höherer Frequenz als das interne System-Taktsignal empfangen werden, so erfolgt die Taktanpassung zunächst dadurch, daß nacheinander, beispielsweise wieder von der Registerkippstufe KA5 ausgehend, die Eingangsdaten in die Registerkippstufen KA5-KA1 eingespeichert werden. Anschließend muß die Einspeicherung von der ersten Registerkippstufe KA1 wieder auf beispielsweise die sechste Registerkippstufe KA6 umgeschaltet werden, da diese mit dem optimalen Taktsignal CK6 getriggert wird. Die dort gespeicherten Datenbits kommen jedoch um die Dauer von vier Bitlängen zusätzlich verzögert bei der D-Kippstufe an. Es soll aber ein kontinuirlicher Datenstrom ausgegeben werden, bei dem auf das zuletzt in die Registerkippstufe KA1 eingespeicherte Datenbit das erste in die Registerkippstufe KA6 eingespeicherte Datenbit unmittelbar folgt.

Bei langsameren Eingangsdaten erfolgt eine Taktanpassung in umgekehrter Richtung bis beispielsweise die Einspeicherung von der Registerkippstufe KA6 auf die erste Registerkippstufe KA1 umgeschaltet wird. Hierzu müssen jedoch alle Datenbits, die in den Registerkippstufen mit niedrigerem Index KA1-KA5 eingespeichert waren, zunächst ausgegeben werden, bevor das erste in die Registerkippstufe KA1 eingespeicherte Datenbit sich anschließt. Entsprechendes gilt auch bereits bei der Änderung der Einspeicherung um nur eine Registerkippstufe.

Beim Umschalten zwischen zwei Taktsignalen zur Einspeicherung der Eingangsdaten werden ohne Zusatzmaßnahmen entweder Datenbits überschrieben oder eingefügt.

Um dies zu vermeiden, kann eine Hintergrundsynchronisierung vorgesehen werden, die mit der beschriebenen Synchronisiereinrichtung - von jetzt ab als Vordergrundsynchronisierung bezeichnet - identisch ist. Nach dem Umschalten werden die ungestörten Daten von der anderen Synchronisierung übernommen, die zweckmäßigerweise bereits die Eingangsdaten mit dem neuen optimalen Taktsignal einspeichert. Während in der Vordergrundsynchronisierung die Eingangsdaten beispielsweise in die erste Registerkippstufe mit dem Taktsignal CK1 eingespeichert werden, werden in der Hintergrundsynchronisierung dieselben Eingangsdaten bereits mit dem anderen optimalen Taktsignal CK7 (aufgrund der Bauteiletoleranzen nicht mit dem Taktsignal CK6, wie dies bei der Vordergrundsynchronisierung der Fall ist) am anderen Ende der Registerkette RK eingespeichert. Durch die Verzögerungskette wird ein Laufzeitausgleich gegenüber den Vordergrund-Ausgangsdaten durchgeführt, so daß ohne Datenverlust mittels eines Umschalt-Steuersignals SV/H zur Übernahme der Hintergrunddaten DH über einen zweiten Dateneingang der Ausgangskippstufe AK umgeschaltet werden kann. Eine Besonderheit liegt jeweils dann vor, wenn von einem Extremwert der Laufzeitkette aus, wie vorstehend beschrieben, auf das andere Ende der Laufzeitkette umgeschaltet werden muß. Werden bei schnellen Eingangsdaten die Datenbits jeweils in die erste Registerkippstufe RK1 eingespeichert und wird eine Umschaltung auf die Hintergrundsynchronisierung erforderlich, so muß die Anzahl der wirksamen Verzögerungskippstufen der Verzögerungskette der Hintergrundsynchronisierung zusätzlich um eins erhöht werden. Ist also zunächst beispielsweise die Registerkippstufe KA6 mit der Verzögerungskippstufe KM6 kombiniert, so wird nach der Taktanpassung über die Registerkippstufen KA5 bis KA1 und nach der ersten Umschaltung von KA1 auf KA6 die Übernahme der Daten in die Verzögerungskippstufe KM5 erfolgen. Bei langsamen Eingangsdaten muß die Anzahl der wirksamen Verzögerungskippstufen entsprechend um eins erniedrigt werden. Nach der Umschaltung kann bei der Vordergrundsynchronisierung eine Taktanpassung durchgeführt werden, bei der die Eingangsdaten entsprechend wie bei der Hintergrundsynchronisierung übernommen werden, und nach einer Einlaufzeit, nach der die Vordergrund-Ausgangsdaten mit den Hintergrund-Ausgangsdaten übereinstimmen, kann die Vordergrundsynchronisierung weiterverwendet werden. Es reicht daher aus, eine Hintergrundsynchronisierung für mehrere Vordergrundsynchronisierungen vorzusehen, da eine Taktanpassung nur in größeren Zeitabständen erforderlich ist. Die Laufzeitkette, das Phasenregister und das Speicherregister sowie Teile der Steuerlogik können für beide Synchronisierungen gemeinsam verwendet werden. Diese Version der Synchronisierung eignet sich für synchrone und auch im beschränkten Umfang für plesiochrone Eingangsdaten. Die Länge der Registerkette und insbesondere der Verzögerungskette bestimmen den maximalen Synchronisierbereich.

Um den Energieverbrauch zu verringern, können in der Registerkette und in der Verzögerungskette jeweils die logische Null bzw. logische Eins bei den gerade zum Datentransport nicht benötigten Kippstufen nachgeschoben werden.

Eine andere Ausbildung der Synchronisiereinrichtung kann auch bei ständigen Frequenzabweichungen zwischen dem empfangenen Digitalsignal und dem internen Taktsignal verwendet werden. Da die Frequenz des internen Taktsignal konstant bleiben soll, müssen die ausgegebenen Datenbits parallelisiert werden, wenn die Frequenz des internen Taktsignals nicht erhöht werden soll. Der zu den ausgegebenen bzw. den zur Weiterverarbeitung vorgesehenen Datenbits mitgelieferte Paralleltakt ist entsprechend langsamer. Werden beispielsweise die Datenbits paarweise ausgegeben, weist er in der Regel die doppelte Periodendauer des Taktsignals auf. Eine zur Seriell-Parallel-Umsetzung geeignete Schaltungsanordnung ist in Figur 4 angegeben. Die Vordergrund-Ausgangsdaten DV werden vom Ausgang der Verzögerungskette VK einem aus zwei Kippstufen KS11 und KS12 bestehenden Schieberegister zugeführt, während die Hintergrund-Ausgangsdaten DH einen entsprechenden aus den Kippstufen KS21 und KS22 bestehende Schieberegister zugeführt werden. Die Ausgänge der ersten Kippstufen KS11 und KS21 sind über einen ersten Multiplexer MX1 auf den Dateneingang einer ersten Parallelwandler-Kippstufe KP1 geschaltet, während die Ausgänge der zweiten Kippstufen KS12 und KS22 über einen zweiten Multiplexer MX2 auf den Dateneingang einer zweiten Parallelwandler-Kippstufe KP2 geschaltet sind. An den Takteingängen der Parallelwandler-Kippstufen liegt das Taktsignal CK0 und an den Freigabe-Eingängen ECK (enable) liegt der Paralleltakt TC an. Die Q-Ausgänge der Parallelwandler-Kippstufen KP1 und KP2 sind mit OC1 und OC2 bezeichnet.

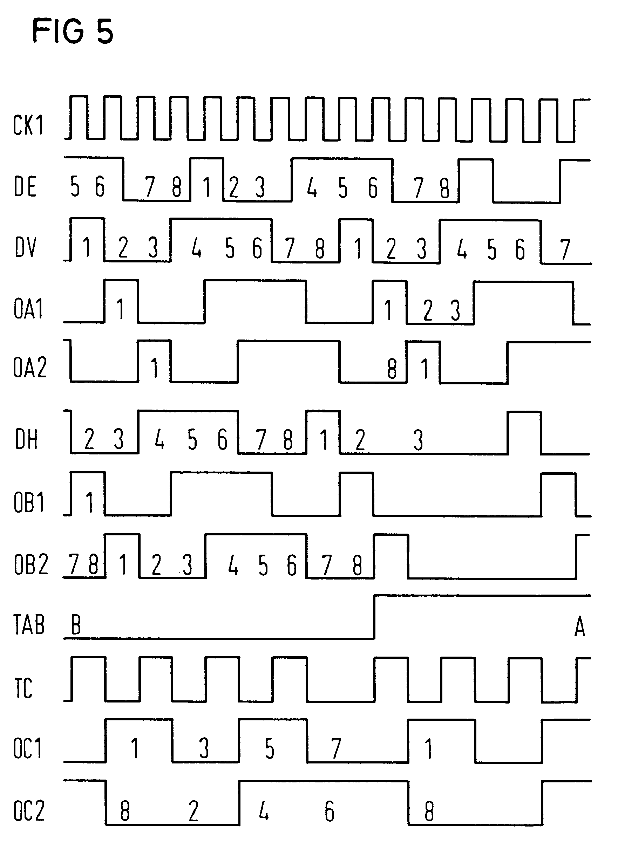

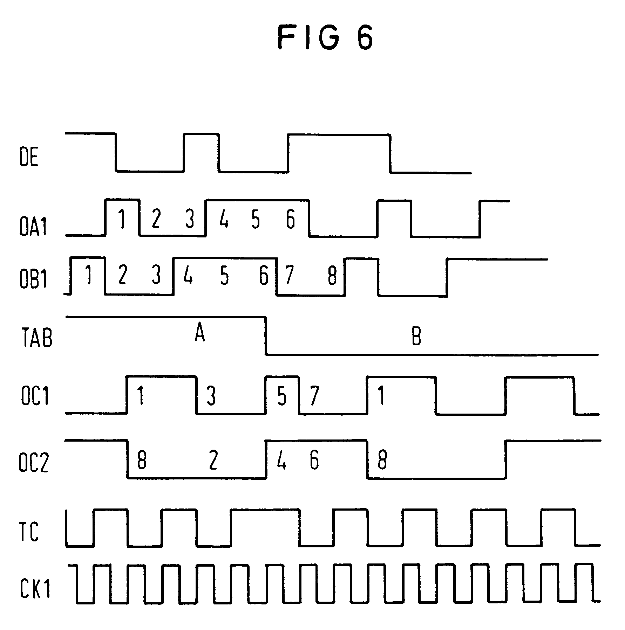

Aus dem Schieberegister KS11, KS12 und KS21, KS22 werden wahlweise Bitpaare OA1, OA2 und OB1, OB2 über die Multiplexer MX1, MX2 in die Parallelwandler-Kippstufen KP1 und KP2 übernommen und an den Parallelausgängen OC1 und OC2 ausgegeben. Die Steuerlogik bestimmt hierbei, welcher Multiplexereingang durchgeschaltet wird und wann Impulse bei dem Paralleltaktsignal TC ein- oder ausgeblendet werden. Für den Fall, daß die Eingangsdaten eine zu niedrige Frequenz aufweisen, muß gelegentlich ein Paralleltaktausgeblendet werden. Dieser Fall ist im Zeitdiagramm nach Figur 5 dargestellt. In diesem Beispiel wird von der Hintergrundsynchronisierung auf die Vordergrundsynchronisierung umgeschaltet. Wenn die Frequenz der Eingangsdaten niedriger ist als das interne Taktsignal, dann wandert die Abtastung stets in Richtung auf die letzte Abtastkippstufe KAn zu. Um einen Datenverlust zu vermeiden, kann nicht ohne weiteres auf eine der vorderen Abtastkippstufen umgeschaltet werden, da dann die in den dazwischen liegenden Registerkippstufen gespeicherte Information verlorenginge. Nach dem Umschalten und Ausblenden eines Paralleltaktes TC muß daher das nächste Paar der Datenbits in der Vordergrundsynchronisierung bereitstehen, um ausgegeben werden zu können. So werden als letztes Bitpaar die Bits 6 und 7 von der Hintergrundsynchronisierung übernommen, die an den Ausgängen OC1 und OC2 um eine Taktperiode eines Taktsignals länger anliegen. Als nächstes Bitpaar werden die Bits 8 und 1 aus der Vordergrundsynchronisierung übernommen. Die Einstellung der richtigen zeitlichen Lage erfolgt jeweils durch die entsprechende Verzögerungskette VK. Im Gegensatz zu der ersten Ausführungsform wird bei einem Umschalten zwischen den Synchronisierungen die Anzahl der Kippstufen der Verzögerungsketten niemals korrigiert. Hierdurch ergeben sich dann die in den Figuren 5 und 6 dargestellten notwendigen Laufzeitunterschiede zwischen den Vordergrund- und Hintergrund- Ausgangsdaten. Eine zweite Synchronisierung wird jeweils nur während des kritischen Umschaltens benötigt, wenn anschließend wieder die "Mastersynchronisierung" richtig eingestellt wird und anschließend deren übernommen werden.

Im Zeitdiagramm nach Figur 6 ist der Fall dargestellt, daß die Eingangsdaten schneller als das interne Taktsignal sind. In diesem Fall verändert sich die Abtastung in Richtung auf die erste Registerkippstufe KA1. Zum Zeitpunkt des Umschaltens auf die Hintergrund-Synchronisierung müssen die Daten des nächsten Bitpaares zur Verfügung stehen. In diesem Fall liegen die Datenbits 4 und 5 nur für die Dauer einer Periode eines Taktsignals am Ausgang an. Das nächste Bitpaar mit den Bits 6 und 7 wird bereits von der Hintergrundsynchronisierung geliefert und mit der nächsten wirksamen Flanke des Taktsignals CK0 übernommen.

Die ausgegebenen Daten können in bekannter Weise in einem Pufferspeicher eingegeben werden oder durch Stopfen wieder in einen quasisynchronen Datenstrom umgesetzt werden. Je nach Ausführungsform eignet sich die Synchronisierung daher zum Ausregeln von Phasenschwankungen, zur Anpassung an langsame reversible Frequenzschwankungen oder auch zum Empfang von plesiochronen oder asynchronen Daten.

## Patentansprüche

1. Synchronisiereinrichtung für Eingangsdaten (DE) hoher Geschwindigkeit,
**gekennzeichnet durch**:
a) eine Laufzeitkette (LK) mit mehreren Verzögerungsgliedern (V1 bis Vn) zur Erzeugung von mehreren gegeneinander phasenverschobenen Taktsignalen (CK1, CK2,... CKn),
b) eine aus mehreren Register-Kippstufen (KA1, KA2,... KAn) gebildeten Registerkette (RK), deren Takteingänge jeweils eines der Taktsignale (CK1, CK2,... CKn) zugeführt ist, wobei das am stärksten verzögerte Taktsignal der letzten Registerkippstufe zugeführt ist, und bei der dem Dateneingang jeder Register-Kippstufe (KA1 bis KAn) die Eingangsdaten (DE) oder der logische Zustand der später getakteten Register-Kippstufen (KA2,...KAn) zugeführt werden kann;
c) ein Phasenregister (PR) mit mehreren Phasenerkennungs-Kippstufen (KB1, KB2,... KBn), deren Dateneingänge ebenfalls jeweils eines der Taktsignale (CK1, CK2,... CKn) zugeführt wird, wobei die Takteingänge von mindestens einer Flanke der Eingangsdaten (DE) oder einem hiervon abgeleiteten Impuls getaktet werden, und
d) eine Steuerlogik (SL), die aufgrund der in den Phasenerkennungs-Kippstufen (KB1, KB2,... KBn) abgespeicherten Zustände der Taktsignale (CK1, CK2,... CKn) die Übernahme der Eingangsdaten (DE) in eine der Register-Kippstufen (KA5) steuert, während die früher getakteten Register-Kippstufen (KA1, KA2,... KA4) jeweils das Datenbit der jeweils vorhergehenden, später getakteten Register-Kippstufe (KA2, KA3,... KA5) übernehmen.

2. Synchronisiereinrichtung nach Anspruch 1,
**dadurch gekennzeichnet**,
daß die Register-Kippstufen (KA1, KA2,... KAn) jeweils zwei durch einen Selekt-Eingang (SE1, SE2,... SEn) steuerbare Dateneingänge aufweisen.

3. Synchronisiereinrichtung nach Anspruch 1 oder 2,
**dadurch gekennzeichnet**,
daß den Phasenerkennungs-Kippstufen (KB1, KB2,... KBn) jeweils eine von einem gemeinsamen Taktsignal (CK0) getriggerte Kippstufe (KC1, KC2,...KCn) nachgeschaltet ist.

4. Synchronisiereinrichtung nach einem der vorhergehenden Ansprüche,
**dadurch gekennzeichnet**,
daß der zweite Dateneingang der mit dem am stärksten verzögerten Taktsignal (CKn) getriggerten Register-Kippstufe (KAn) an einen festen logischen Zustand ("0") geschaltet ist.

5. Synchronisiereinrichtung nach einem der vorhergehenden Ansprüche,
**dadurch gekennzeichnet**,
daß jeweils der Takteingang einer Register-Kippstufe (KA1, KA2, ... KAn) und der Dateneingang einer Phasenerkennungs-Kippstufe (KB1, KB2,... KBn) zusammengeschaltet wird.

6. Synchronisiereinrichtung nach einem der vorhergehenden Ansprüche,
**dadurch gekennzeichnet**,
daß die die Registerkippstufen (KA1, KA2,... KAn) ansteuernden Taktsignale (CK1, CK1; CK2, CK2,... CKn, CKn) invertierbar sind.

7. Synchronisiereinrichtung nach einem der vorhergehenden Ansprüche,
**dadurch gekennzeichnet**,
daß eine Verzögerungskette (VK) mit mehreren als Schieberegister geschalteten Laufzeit-Kippstufen (KM1, KM2,... KMm) vorgesehen ist, die von einem gemeinsamen Taktsignal angesteuert werden und die das von der Registerkette (RK) abgegebene Datensignal verzögern, und
daß Mittel vorgesehen sind, die Länge des Schieberegisters und damit die Verzögerungdauer zu ändern.

8. Synchronisiereinrichtung nach einem der vorhergehenden Ansprüche,
**dadurch gekennzeichnet**,
daß bei einem Wechsel der Einspeicherung der Eingangsdaten von einer Register-Kippstufe (KA1) auf eine hintere Register-Kippstufe (KA2-KAn,...) oder von einer hinteren Register-Kippstufe (VAn) auf eine vordere Register-Kippstufen (KA1-KAn-1) ein entsprechender Laufzeitausgleich von der Verzögerungskette (VK) durchgeführt wird.

9. Synchronisiereinrichtung nach einem der Ansprüche 1 bis 8,
**dadurch gekennzeichnet**,
daß eine Hintergrund-Synchronisierung vorgesehen ist, deren Datenausgang (AH) an einen weiteren Eingang einer Ausgangs-Kippstufe (AK) angeschaltet ist, deren erster Eingang an den entsprechenden Ausgang der Synchronisiereinrichtung angeschaltet ist, und daß bei einer Phasenanpassung zwischen den Ausgangsdaten (DV, DH) der Synchronisiereinrichtungen umgeschaltet wird, um einen Datenverlust zu vermeiden.

10. Synchronisiereinrichtung nach Anspruch 9,
**dadurch gekennzeichnet**,
daß die Ausgangsdaten (DV, DH) der Vordergrund- und der Hintergrundsynchronisierung parallelisiert werden und jeweils mit einem von einem Taktsignal (CK0) abgeleiteten Paralleltakt (TC) ausgegeben werden, der durch Ein- oder Ausblenden von einzelnen Taktimpulsen an die Frequenz der Eingangsdaten (DE) angepaßt wird.

## Claims

1. Synchronization device for input data (DE) of high speed, characterized by:
a) a delay line (LK) having a plurality of delay elements (V1 to Vn) for generation of a plurality of clock signals (CK1, CK2,... CKn) phase-shifted with respect to each other,
b) a register chain (RK) formed from a plurality of register flip-flops (KA1, KA2,... KAn), to whose clock inputs respectively one of the clock signals (CK1, CK2, ... CKn) is fed, the most-delayed clock signal being fed to the last register flip-flop, and in which the input data (DE) or the logical state of the register flip-flops (KA2,... KAn) clocked later can be fed to the data input of each register flip-flop (KA1 to KAn);
c) a phase register (PR) with a plurality of phase detection flip-flops (KB1, KB2,... KBn), to whose data inputs likewise respectively one of the clock signals (CK1, CK2,... CKn) is fed, the clock inputs being clocked by at least one edge of the input data (DE) or by a pulse derived herefrom, and
d) a control logic unit (SL), which controls the transfer of the input data (DE) into one of the register flip-flops (KA5) on the basis of the states of the clock signals (CK1, CK2,... CKn) stored in the phase detection flip-flops (KB1, KB2,... KBn), while the register flip-flops (KA1, KA2,... KA4) clocked earlier receive in each case the data bit from the respective previous register flip-flop (KA2, KA3,... KA5) clocked later.

2. Synchronization device according to Claim 1, characterized in that the register flip-flops (KA1, KA2,...KAn) have, in each case, two data inputs which can be controlled via a select input (SE1, SE2,... SEn).

3. Synchronization device according to Claim 1 or 2, characterized in that a flip-flop (KC1, KC2,... KCn), triggered by a common clock signal (CK0), is connected in each case downstream of the phase detection flip-flops (KB1, KB2,... KBn).

4. Synchronization device according to one of the preceding claims, characterized in that the second data input of the register flip-flop (KAn) triggered by the most-delayed clock signal (CKn) is connected to a fixed logical state ("0").

5. Synchronization device according to one of the preceding claims, characterized in that in each case the clock input of a register flip-flop (KA1, KA2,...KAn) and the data input of a phase detection flip-flop (KB1, KB2,... KBn) are connected together.

6. Synchronization device according to one of the preceding claims, characterized in that the clock signals (CK1, CK1; CK2, CK2,... CKn, CKn) controlling the register flip-flops (KA1, KA2,... KAn) are invertible.

7. Synchronization device according to one of the preceding claims, characterized in that a delay chain (VK) is provided, having a plurality of delay flip-flops (KM1, KM2,...KMm) connected as a shift register, which are controlled by a common clock signal and which delay the data signal emitted by the register chain (RK), and in that means are provided to change the length of the shift register and thus the delay duration.

8. Synchronization device according to one of the preceding claims, characterized in that, in the event of a change of the storage of the input data from one register flip-flop (KA1) to a register flip-flop (KA2-KAn,...) behind or from a register flip-flop (VAn) behind to a register flip-flop (KA1-KAn-1) in front, a corresponding equalization of the transit time of the delay chain (VK) is carried out.

9. Synchronization device according to one of Claims 1 to 8, characterized in that a background synchronization is provided, whose data output (AH) is connected to a further input of an output flip-flop (AK), whose first input is connected to the corresponding output of the synchronization device, and in that, in the case of a matching of phase between the output data (DV, DH) from the synchronization devices, a switch-over takes place in order to avoid a loss of data.

10. Synchronization device according to Claim 9, characterized in that the output data (DV, DH) from the foreground synchronization and from the background synchronization are converted into parallel form and are emitted in each case with a parallel clock rate (TC) derived from one clock signal (CK0), which clock rate is matched to the frequency of the input data (DE) by inserting or blanking out individual clock pulses.

## Revendications

1. Dispositif de synchronisation pour des données d'entrée (DE) circulant à grande vitesse,
caractérisé par
a) une ligne à retard (LK) comportant plusieurs circuits de retardement (V1 à Vn) pour produire des signaux de cadence (CK1, CK2,...CKn) déphasés réciproquement,
b) une chaîne de registres (RK), qui est formée par plusieurs étages à bascule de registres (KA1, KA2,... KAn) et aux entrées de cadence duquel est envoyé respectivement l'un des signaux de cadence (CK1,CK2,...CKn), le signal de cadence le plus fortement retardé étant envoyé au dernier étage à bascule du registre, et dans lequel les données d'entrée (DE) ou l'état logique des étages à bascule (KA2,...KAn) du registre, commandés ultérieurement de façon cadencée, peuvent être envoyées à l'entrée de données de chaque étage à bascule (KA1 à KAn) du registre;
c) un registre de phase comportant plusieurs étages à bascule d'identification de phase (KB1,KB2,...KBn), aux entrées de données desquels est envoyé respectivement l'un des signaux de cadence (CK1,CK2,...CKn), les entrées de cadence étant commandées de façon cadencée par au moins un flanc des données d'entrée (DE) ou par une impulsion qui en est dérivée,
d) une logique de commande (SL), qui, sur la base des états des signaux de cadence (CK1,CK2...CKn), qui sont mémorisés dans les étages à bascule d'identification de phase (KB1, KB2,...KBn), commande le transfert des données d'entrée (DE) dans l'un des étages à bascule (KA5), tandis que les étages à bascule (KA1, KA2,...KA4) du registre, qui ont été commandés antérieurement, prennent en charge respectivement le bit de donnée de l'étage à bascule respectivement précédent (KA2, KA3,...KA5), du registre, qui est commandé de façon cadencée ultérieurement.

2. Dispositif de synchronisation suivant la revendication 1, caractérisé par le fait que les étages à bascule (KA1,KA2,...KAn) du registre possèdent respectivement deux entrées de données, qui peuvent être commandées par une entrée de sélection (SE1,SE2,...SEn).

3. Dispositif de synchronisation suivant la revendication 1 ou 2, caractérisé par le fait que respectivement un étage à bascule (KC1,KC2,...KCn), déclenché par un signal de cadence commun (CK0), est branché en aval des étages à bascule d'identification de phase (KB1,KB2,... KBn).

4. Dispositif de synchronisation suivant l'une des revendications précédentes, caractérisé par le fait que la seconde entrée de données de l'étage à bascule (KAn) du registre, qui est déclenchée par le signal de cadence (CKn) le plus retardé, est placé dans un état logique fixe ("0").

5. Dispositif de synchronisation suivant l'une des revendications précédentes, caractérisé par le fait que respectivement l'entrée de cadence d'un étage à bascule (KA1, KA2,...KAn) du registre et l'entrée de données d'un étage à bascule d'identification de phase (KB1,KB2,...KBn) sont interconnectés.

6. Dispositif de synchronisation suivant l'une des revendications précédentes, caractérisé par le fait que les signaux de cadence (CK1,CK1; CK2,CK2, ... CKn,CKn), qui commandent les étages à bascule (KA1,KA2,...KAn) du registre, peuvent être inversés.

7. Dispositif de synchronisation suivant l'une des revendications précédentes, caractérisé par le fait qu'il est prévu une ligne à retard (VK) comportant plusieurs étages à bascule à temps de transit (KM1,KM2,...KMm), qui sont branchés en tant que registre à décalage et sont commandés par un signal de cadence commun et retardent le signal de données délivré par la chaîne de registre (RK), et qu'il est prévu des moyens pour modifier la longueur du registre à décalage et par conséquent la durée du retard.

8. Dispositif de synchronisation suivant l'une des revendications précédentes, caractérisé par le fait que, dans le cas d'une alternance de la mémorisation des données d'entrée d'un étage à bascule (KA1) du registre à un étage à bascule arrière (KA2, KAn,...) du registre ou d'un étage à bascule arrière (KAn) du registre à un étage à bascule avant (KA1-KAn-1) du registre, une compensation correspondante du temps de propagation de la ligne à retard (VK) est réalisée.

9. Dispositif de synchronisation suivant l'une des revendications 1 à 8, caractérisé par le fait qu'il est prévu une unité de synchronisation d'arrière-plan, dont la sortie de données (AH) est raccordée à une entrée d'un étage à bascule de sortie (AK), dont la première entrée est connectée à la sortie correspondante du dispositif de synchronisation, et que lors d'une adaptation de phase, une commutation est effectuée entre les données de sortie (DV,DH) des dispositif de synchronisation pour éviter une perte de données.

10. Dispositif de synchronisation suivant la revendication 9, caractérisé par le fait que les données de sortie (DV,DH) de l'unité de synchronisation de premier plan et de l'unité de sortie de synchronisation d'arrière-plan sont transmises en parallèle et délivrées respectivement au moyen d'une cadence parallèle (TC) dérivé d'un signal de cadence (CK0) et qui est adapté, par insertion ou suppression d'impulsions individuelles de cadence, à la fréquence des données d'entrée (DE).
